# EUROPEAN PATENT APPLICATION

(11) **EP 4 560 898 A1**
(43) Date of publication of application: **28.05.2025**
(21) Application number: 23211364.7
(22) Date of filing: 22.11.2023
(51) Int. Cl.: H02K 11/042, H02K 7/00, H02K 9/22, H02K 11/33

(54) **AN ELECTRICALLY EXCITED ROTOR FOR AN ELECTRIC MOTOR**

(71) Applicant: Polestar Performance AB, 405 31 Gothenburg (SE)
(72) Inventor: HOHLFÄLT, Peter, 475 37 Bohus-Björkö (SE)
(74) Representative: Zacco Sweden AB

(57) **Abstract**

The present disclosure relates to an electrically excited rotor (100) and a method (200) for manufacturing an electrically excited rotor. The rotor (100) comprises a rectifier board (15) comprising a substrate structure (19), and switching and control components (16), the switching and control components (16) being embedded in said substrate structure (19) between a first and an opposing second surface (15a, 15b) of said substrate structure (19). Further, the rectifier board (15) is secured to an interior (21) of said rotor shaft (20).

## Description

### TECHNICAL FIELD

The present disclosure relates to an electrically excited rotor and a method for manufacturing an electrically excited rotor.

### BACKGROUND

In an electric vehicle, the rotor and stator are vital components of the electric motor that drives the vehicle's wheels. The rotor is the rotating part of the motor, typically made of a series of electromagnets, which are energized by electrical current. As the rotor spins, it generates a magnetic field that interacts with the stator. The stator is the stationary part of the electric motor, typically comprising windings wound around a core. The rotor and stator work together to convert electrical energy stored in the EV's battery into mechanical energy to drive the vehicle, making them critical components of the EV powertrain.

Permanent magnets used in rotors are not considered environmentally friendly for several reasons. First, the production of permanent magnets involves mining and refining of rare earth elements, which can cause environmental degradation and pollution. Also, permanent magnets can pose challenges in recycling and disposal, as they contain hazardous materials that can potentially harm the environment if not handled properly. Therefore, while permanent magnets have many technological benefits, their production and use can have negative environmental implications that need to be carefully managed.

Based on the above, electrically excited rotors using windings around the rotor core are considered to be more environmental friendly compared to permanent magnet rotors. However, the use of an electrically excited rotor requires electronic circuitry and other components which lead to additional steps during manufacturing.

Moreover, such electronic circuitry, such as the rectifier board of the rotor will be influenced by centrifugal forces during rotation of the rotor. Accordingly, the rectifier board and all associated elements, need to be properly secured to the rotor to ensure that the rotor can be utilized for a prolonged time-period without the need for maintenance.

Conventional electrically excited rotors of the present art does not have rectifier boards or elements thereof securely attached to the rotor. Hence, the overall rotor fail to provide sufficient durability.

Therefore, it would be desirable to provide an electrically excited rotor which comprises electronic circuitry that is more durably attached thereto compared to previous solutions.

### SUMMARY

It is therefore an object of the present disclosure to alleviate at least some of the mentioned drawbacks to provide an electrically excited rotor and a method for manufacturing an electrically excited rotor. The present disclosure is at least partly based on the insight that an electrically excited rotor having a rectifier board with embedded switching and control components will be more durable.

The present disclosure relates to an electrically excited rotor for an electric motor comprising an annular rotor core comprising a circumferentially distributed winding. Further, the rotor comprises a hollow rotor shaft accommodated by said annular rotor core, the rotor shaft extending axially along a centre axis thereof. Further, the rotor comprises a transformer device and a rectifier board arranged to receive alternating current (AC) power from said transformer device and rectify said AC power to direct current (DC) power for supplying the DC power to the windings. Moreover, the rotor comprises a busbar arrangement electrically connecting said rectifier board between said winding and said transformer device. Further, the rectifier board comprises a substrate structure (which may form a block of dielectric), wherein switching and control components are embedded in said substrate structure between a first and an opposing second surface of said substrate structure. Furthermore, the rectifier board is secured to an interior of said rotor shaft. An advantage of the electrically excited rotor of the present disclosure is that the rectifier board and the switching and control components attached thereto will be resistant to centrifugal forces. Further, as the switching and control components are embedded within the substrate structure of the rectifier board, they will also be protected from dust, dirt and moisture and thereby have a prolonged lifetime.

The term embedded may refer to that the switching and control components are only exposed to the inner mass of the substrate structure. Hence, the substrate structure of the rectifier board may fully embed the switching and control components therein. The substrate structure may be formed by FR-4, PTFE or any other suitable material. Accordingly, the substrate may be formed by a glass reinforced epoxy laminate sheet or any plastic material. The substrate structure may also embed a conductive pathway, which enables collectively/jointly with the switching and control components, the rectifier board to rectify obtained AC power to DC power.

The rotor shaft may comprise a base surface at an end portion thereof. The first surface of the substrate structure may be attached to said base surface. Thereby, the rectifier board will be supported by the base surface to further secure the rectifier board to the rotor. In some aspects, the rectifier board may abut the base surface such that the base surface can act as a heat sink for absorbing heat from the rectifier board.

The rectifier board may further comprise at least one thermal vertical interconnect access (VIA) arranged to dissipate heat away from the switching and control components.

As the switching and control components are embedded in the rectifier board, it may be more challenging for the rectifier board to dissipate heat away from the (interior of) rectifier board/the switching and control components. Then, the VIA's may facilitate cooling of the switching and control components to transfer heat away therefrom. The VIA's may be formed by copper or any other thermally conductive material. The VIA's may extend in the form of rods towards the switching and control components.

The least one VIA may be in contact with a non-conductive portion of at least one of the switching and control components. Hence, at least one of the switching and control components may comprise a non-conductive portion arranged to connect to an end of a VIA. This enable the VIA to be as close to the component as possible, thereby dissipating heat away in an efficient manner.

The first surface and/or the second surface may comprise at least one thermal plate. Then, the at least one VIA may be thermally connected to said at least one thermal plate. Preferably, the at least one of the thermal plate abuts said rotor base. Advantageously, each thermal plate efficiently can dissipate heat away from the switching and control components through the VIA, the thermal plate, onto the shaft.

Hence, the switching and control components will be properly secured to the rectifier board (resistant to adverse effects of centrifugal forces) while having sufficient thermal regulation properties.

The substrate structure may comprise at least a first and a second layer of substrates. Accordingly, the switching and control components may be on an attachment surface (which may also comprise (e.g., copper) traces forming conductive pathways) of said first layer. The traces may be provided by (through photolithography) traces which are transferred to the substrate structure by e.g. etching. Further, prior to etching the substrate may be subjected to a development process. Further, traces may also comprise holes for component placement. The switching and control components may be attached to the substrate structure prior to or after that the traces are defined thereon. Accordingly, the traces may enable, when said switching and control components are connected thereto, the rectifier board to be configured/operable to obtain, by the busbars, alternating current (AC) power from a transformer device and/or be operable to, by the busbars, transmit direct current (DC) power from the rectifier board to windings of a rotor. Accordingly, the traces may also comprise pads/cavities for switching and control component placement.

Further, the second layer may cover said attachment surface, thereby embedding said switching and control components within the rectifier board between the attachment surface and the second layer.

The layers may be joined by a molding process, to form a one-piece rectifier board with switching and control components embedded therein. In some aspects, the layers are joined by bonding, welding, adhesive or any other suitable process even though molding is preferable as it may provide an integral substrate structure with embedded switching and control components such that the components are not visible or exposed to the ambient environment only to substrate mass.

The present disclosure further relates to a method for manufacturing an electrically excited rotor. The method comprising the steps of providing an annular rotor core comprising a circumferentially distributed winding, the annular rotor core accommodating a hollow rotor shaft extending axially along a centre axis. Further, the method comprises the step of providing a transformer device and a rectifier board, the rectifier board being provided by forming a first layer of a substrate and forming traces at an attachment surface of said first layer. Further, the method comprises the step of mounting control and switching components to said attachment surface, preferably by a surface mounting process. Further, the method comprises the step of attaching a second layer of substrate on top of said first layer of substrate to embed said control and switching components. Moreover, the method comprises the step of assembling said annular rotor core, transformer device and rectifier board to form an electrically excited rotor, wherein the rectifier board is electrically connected between said winding and said transformer device by a busbar arrangement.

The method may provide the same or substantially the same advantages as the rotor disclosed herein.

The second layer of substrate may be molded to said first layer of substrate. In other words, the second layer of substrate may be attached to said first layer by molding. Specifically, the second layer of substrate may be attached to said first layer by overmolding. Accordingly, the first layer of substrate may have traces, control and switching components. Further, the second layer may be applied thereto by molding to form a common piece.

At least one of the first and second layer may comprise at least one thermal VIA arranged to dissipate heat away from the switching and control components. Further, in some aspects, the at least one VIA is connected to at least one thermal plate, the thermal plate may be part of an outer surface of said second layer. The thermal plate may be attached to said substrate structure by molding.

The step of assembling may comprise attaching said rectifier board to a base surface of said rotor shaft, wherein the thermal plate abuts said base surface. The attachment may be performed by screws, bolts, nuts or any other fastening means.

The transformer device may comprise a rotary part and a static part. The rotary part may be inserted so to be attached to the rotor shaft. The static part part may be attached to a frame of the rotor. The static part may be arranged to receive AC power from e.g. a battery pack of an electric vehicle and inductively transmit the AC power to the rotary part. The rotary part may be connected to the rectifier board by means of a busbar arrangement such that the AC power is obtained by the rectifier board. A part of the busbar arrangement may be attached to the attachment surface prior to attaching the second layer to the first layer.

The at least one VIA may preferably be a plurality of VIA's such as 2-100, or 2-80, or 2-50, or at least 5 or at least 10 or at least 15 VIA's.

The present disclosure further relates to an electric motor comprising the rotor according to any aspect herein. Further, the present disclosure relates to an electric vehicle comprising such an electric motor.

### BRIEF DESCRIPTION OF THE DRAWINGS

These and other features and advantages of the present disclosure will now be further clarified and described in more detail, with reference to the appended drawings;
- Figure 1: illustrates a side schematical view of a rotor in which the rotor core is not shown;
- Figure 2: illustrates a part of a cross-sectional side view of a rotor shaft with a rectifier board therein in accordance with some aspects of the present disclosure;
- Figure 3: illustrates a part of a cross-sectional side view of a rotor shaft with a rectifier board therein in accordance with some aspects of the present disclosure;
- Figure 4: illustrates an objective exploded view of a rotor in accordance with some aspects of the present disclosure;
- Figure 5: illustrates a side schematical view of an electric vehicle in accordance with some aspects of the present disclosure; and
- Figure 6: illustrates in the form of a flowchart a method for manufacturing an electrically excited rotor in accordance with some aspects of the present disclosure;

### DETAILED DESCRIPTION

In the following detailed description, some embodiments of the present disclosure will be described. However, it is to be understood that features of the different embodiments are exchangeable between the embodiments and may be combined in different ways, unless anything else is specifically indicated. Even though in the following description, numerous specific details are set forth to provide a more thorough understanding of the present disclosure, it will be apparent to one skilled in the art that the present disclosure may be practiced without these specific details. In other instances, well known constructions or functions are not described in detail, so as not to obscure the present disclosure.

It is also to be understood that the terminology used herein is for purpose of describing particular aspects only, and is not intended to be limiting. It should be noted that, as used in the specification and the appended claim, the articles "a", "an", "the", and "said" are intended to mean that there are one or more of the elements unless the context clearly dictates otherwise. Thus, for example, reference to "a unit" or "the unit" may refer to more than one unit in some contexts, and the like. Furthermore, the words "comprising", "including", "containing" do not exclude other elements or steps. It should be emphasized that the term "comprises/comprising" when used in this specification is taken to specify the presence of stated features, integers, steps, or components. It does not preclude the presence or addition of one or more other features, integers, steps, components, or groups thereof. The term "and/or" is to be interpreted as meaning "both" as well and each as an alternative. More specifically, the wording "one or more" of a set of elements (as in "one or more of A, Band C" or "at least one of A, B and C") is to be interpreted as either a conjunctive or disjunctive logic. Put differently, it may refer either to all elements, one element or combination of two or more elements of a set of elements. For example, the wording "A, B and C" may be interpreted as A or B or C, A and B and C, A and B, B and C, or A and C.

It will also be understood that, although the term first, second, etc. may be used herein to describe various elements or features, these elements should not be limited by these terms.

These terms are only used to distinguish one element from another. For example, a first element could be termed a second element, and, similarly, a second element could be termed a first element, without departing from the scope of the embodiments. The first element and the second element are both elements, but they are not the same element.

The term "electric vehicle" as used herein may refer to an all-electric vehicle, also referred to as an EV, a plug-in hybrid vehicle, also referred to as a PHEV, or a hybrid vehicle, also referred to as a HEV, where a hybrid vehicle refers to a vehicle utilizing multiple propulsion sources one of which is an electric drive system.

The term "hollow rotor shaft" may refer to that the rotor shaft comprises a void/space at the interior of the rotor shaft. The rotor shaft may at one end be connected to an output shaft of an EV.

The term "rotor" herein may refer to an electrically excited rotor. An electrically excited rotor being a rotor that is magnetized by an external electrical source. Preferably, DC power received from a rectifier board.

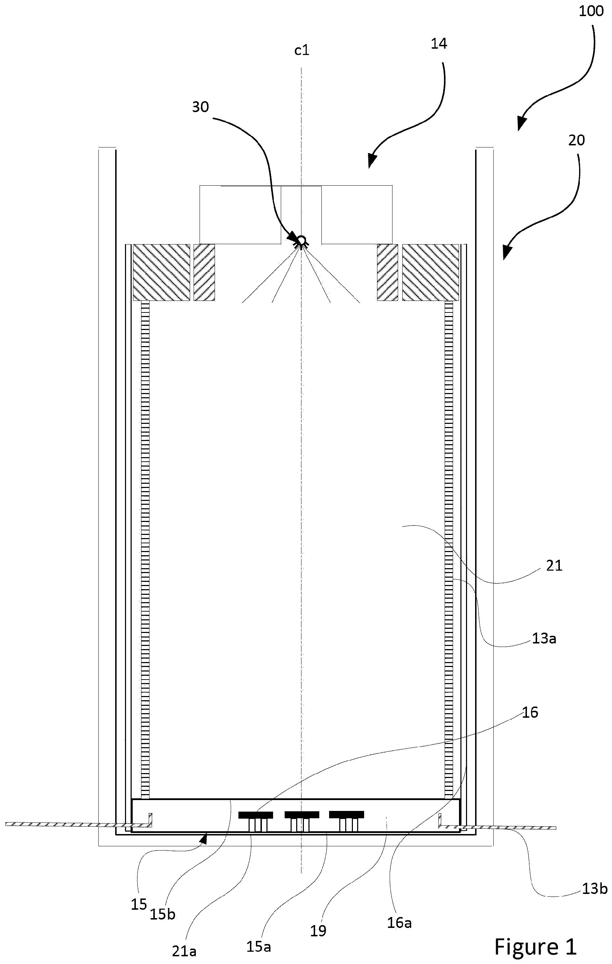

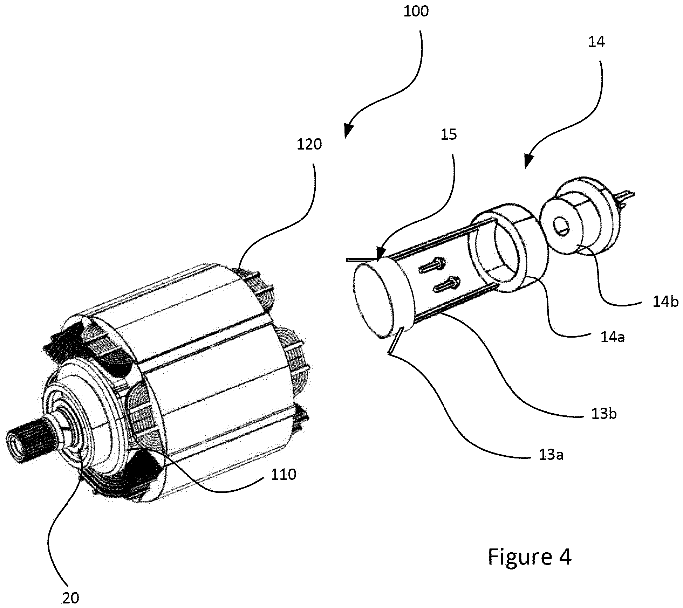

Figure 1 illustrates a cross-sectional side view of a part of an electrically excited rotor 100 in which the rotor core is not shown. Accordingly, Figure 1 illustrates the rotor shaft 20 of the electrically excited rotor 100 according to some aspects of the present disclosure. The rotor shaft 20 is arranged to be accommodated by the annular rotor core comprising a circumferentially distributed winding (not shown, see Figure 4). The rotor shaft 20 extends axially along a centre axis c1. Figure 1 further illustrates a transformer device 14 and a rectifier board 15 arranged to receive AC power from said transformer device 14 so to rectify said AC power to DC power. Further, Figure 1 illustrates a busbar arrangement 13a, 13b electrically connecting said rectifier board 15 between said winding and said transformer device 14.

Further, Figure 1 illustrates that the rectifier board 15 comprises a substrate structure 19, and switching and control components 16, the switching and control components 16 being embedded in said substrate structure 19 between a first and an opposing second surface 15a, 15b of said rectifier board 15. Further, Figure 1 illustrates that the rectifier board 15 is secured to an interior 21 of said rotor shaft 20.

Figure 1 further illustrates that the rotor shaft 20 comprises a base surface 21a at said interior 21 at one end portion of said rotor shaft 20. Further, the first surface 15a of said substrate structure 19 is attached to said base surface 21a. In some aspects, the first surface 15a may abut the base surface 21a. The base surface 21a may as illustrated be located at an axial end of the rotor shaft 20. Hence, the rotor shaft 20 may comprise two base surfaces which may jointly define the depth of the shaft 20.

Figure 1 further illustrates that the rotor shaft 20 may comprise a cooling device 30 arranged to inject/spray cooling medium (such as oil) towards the base 21a of the rotor shaft 20. Hence, as illustrated in Figure 1, the rectifier board 15 may directly receive the cooling medium outputted by the cooling device 30. The cooling device 30 may receive the cooling medium from a reservoir. Further, the rotor shaft/rotor may comprise a collector device (not shown) for capturing cooling medium after it has been injected onto the rectifier board 15.

The switching and control components 16 as illustrated in Figure 1 are illustrated schematically and may vary in accordance with the requirements of the rectifier board. The switching and control components may comprise rectifier bridges, diodes, transistors, thyristors, gate drivers, control circuits (e.g. micro controllers), voltage regulators, sensor devices and any other suitable components for enabling the rectifier board to convert AC power to DC power. Further, the switching and control components 16 may comprise protection components such as fuses and circuit breakers. In some aspects herein, the term "switching and control components" may be interchanged with electrical components.

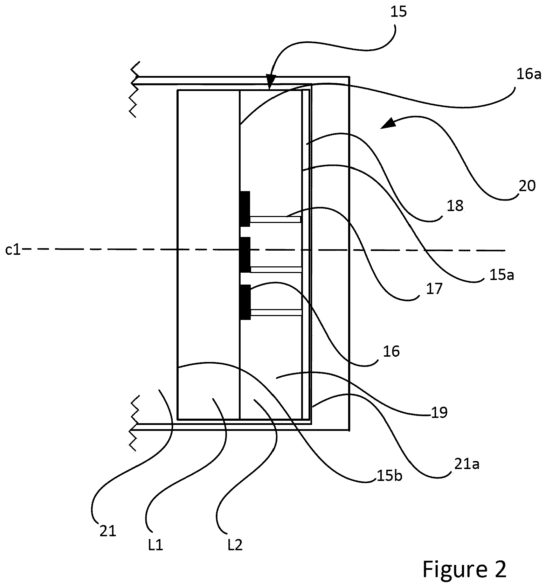

Figure 2 illustrates a part of a cross-sectional side view of a rotor shaft. Figure 2 illustrates that the rectifier board 15 comprises at least one thermal VIA 17, arranged to dissipate heat away from the switching and control components 16. Further, Figure 2 illustrates that the at least one VIA 17 may be in contact with a non-conductive portion of one of the switching and control components 16. The VIA's 17 may be formed by e.g. copper or any other conductive material.

Moreover, Figure 2 illustrates that the first surface 15a and/or the second surface 15b (not shown) comprises at least one thermal plate 18. Each thermal plate 18 may extend over at least 50% of said surface, or over at least 75% of said surface, or over the full surface 15a. The surfaces 15a, 15b may define a circular surface so that the rectifier board 15 generally forms a cylinder so that the VIA's extend orthogonally relative the base of the cylinder. The at least one VIA 16 is thermally/directly connected to said thermal plate 18. It should be noted that in Figure 2, the VIA's 17 extend through substantially half the thickness of the substrate structure 19, however the rectifier board 15 may additionally or alternatively comprise VIA's extending through the full thickness of the substrate structure 19. In some aspects, the rectifier board 15 may comprise a plurality of VIA's some of which extend to/towards the switching and control components 16 and some of which extend through the full thickness of the rectifier board 15. Preferably, then, the rectifier board comprises a first and a second thermal plate 18.

Further, an advantage of having a first and a second thermal plate on opposite surfaces 15a, 15b of the substrate structure 19 is that, e.g. if the rotor comprises a cooling device (see Figure 1) that injects cooling medium. A thermal regulation of the rectifier board 15 may be provided by that the first thermal plate of said second surface 15b thermally affects the VIA's which in turn thermally affect the second thermal plate which in turn may be abutting the rotor base 21a. Thereby, a thermal pathway may be formed which enable the rectifier device 15 to be rapidly cooled.

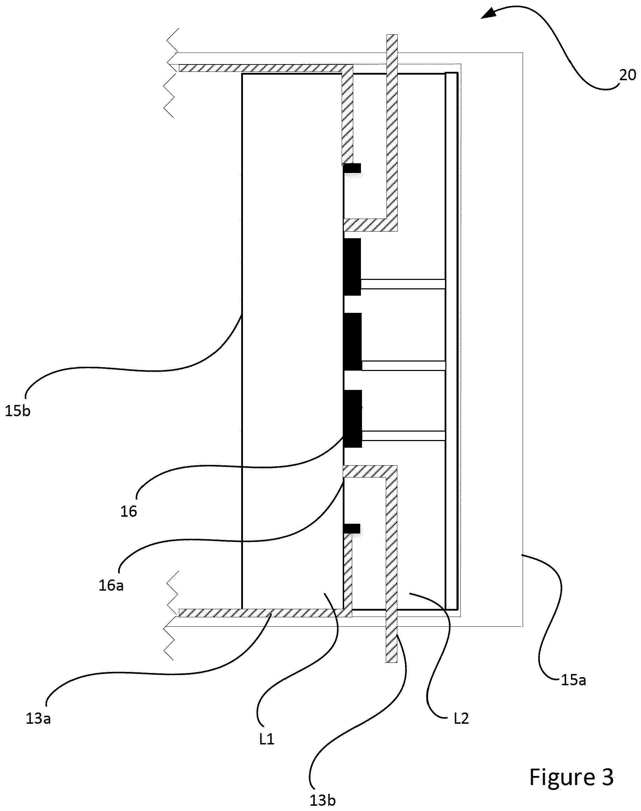

Figure 3 illustrates a part of a cross-sectional side view of a rotor shaft 20 in accordance with some aspects herein. Figure 3 illustrates that the substrate structure 19 may comprise at least a first and a second layer of substrates L1, L2, wherein the switching and control components 16 are on an attachment surface 16a of said first layer, wherein said second layer L2 covers said attachment surface 16a, thereby embedding said switching and control components 16 within the rectifier board 15. As illustrated in Figure 3, also parts of the busbar arrangement 13a, 13b may be embedded in said rectifier board 15. The busbar arrangement may comprise a first pair of busbars 13a extending between the transformer device (see ref. numeral 14 in Figure 1) and the rectifier board 15 and a second pair of busbars 13b extending between the rotor winding (not shown) and the rectifier board 15. As illustrated in Figure 3, an outer surface of said first layer L1 may be the second surface 15b and the outer surface of said second layer L2 may be the first surface 15a.

The second pair of busbars 13b may be connected between the rectifier board 15 and the rotor winding such that one busbar of the pair 13b may, at one end, is connected to a positive terminal of the rectifier board 15 and the other, at one end, to a negative terminal of the rectifier board 15. Accordingly, the other ends of the second pair of busbars 13b may be adapted to connect to the rotor winding. The first pair of busbars 13a may be connected between the rectifier board 15 and the transformer device 14 such that one busbar of the pair 13a serve to carry AC power to the rectifier 15 while the other busbar is a neutral conductor. However, other configurations are possible within the context of the present disclosure. E.g. in some aspects, the winding may be directly connected to the rectifier board 15.

Figure 4 illustrates an exploded objective view of a rotor 100 in accordance with the present disclosure. As illustrated in Figure 4 the rotor 100 comprises an annular rotor core 110 comprising a circumferentially distributed winding 120. Further, the rotor 100 comprises a hollow rotor shaft 20 accommodated by said annular rotor core 110, the rotor shaft 20 extending axially along a centre axis c1. Accordingly, the rotor shaft 20 of Figure 4 may correspond to the rotor shaft 20 of any of Figures 1-3. Further, the rotor 100 comprises a transformer device 14. The transformer device 14 may comprise a rotary part 14a and a static part 14b. The static part 14b may transmit AC power/current received from a power source (e.g. battery pack) inductively to the rotary part 14a which preferably is attached to the interior of the shaft 20. The transfer of AC power may be radially transferred, i.e. the rotary part 14a may radially enclose the static part 14b or vice versa. Each part 14a, 14b may comprise e.g. a ferrite core with conductors wound about said ferrite core, thereby enabling the inductive transfer of power.

The rotor 100 further comprises a rectifier board 15 arranged to receive AC power from said (rotary part 14a of said) transformer device 14 and rectify said AC power to DC power. Further, the rotor comprises a busbar arrangement 13a, 13b electrically connecting said rectifier board 15 between said winding 120 and said transformer device 14. Thereby, enabling a power source such as the battery pack to power the winding 120 of the rotor 100 to simulate a permanent magnetic field. The rotor 100 may comprise any suitable number of poles such as 4 or 6 poles. Also the rotor 100 may comprise a single winding 120 wound around all poles or a plurality of windings.

Further, the rectifier board 15 and at least a part of the transformer device 14 may be enclosed in a dielectric enclosure such that the rectifier board 14 and said at least a part of the transformer device 14 can be inserted into the rotor shaft 20 as a single unit. I.e. prior to assembling the components in the shaft 20 of the rotor 100; the rectifier board 15 and at least a part (e.g the rotary part) of the transformer device 14 may be inserted in a dielectric enclosure. This enables protection of the components and also convenient installation of the rectifier board 15/transformer device 14. The dielectric device 14 may circumferentially surround the rectifier board 15 and at least a part (e.g the rotary part) of the transformer device 14 such that they are not in contact with the circumference of the rotor shaft 20.

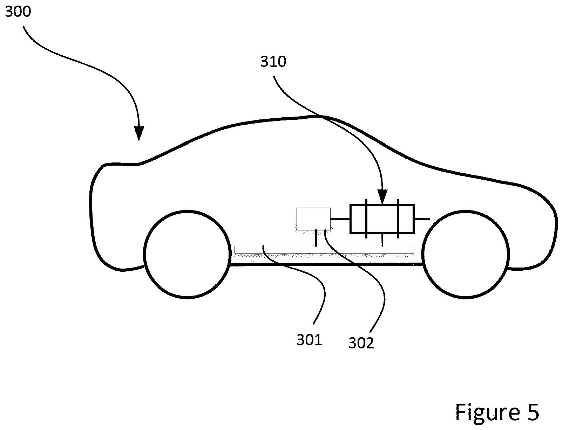

Figure 5 illustrates schematically a side view of a vehicle 300 comprising an electric motor 310. The electric motor 310 may comprise the rotor 100 according to any aspect herein accommodated by a stator so to form an electric motor 310. The stator may comprise a stator winding arranged to receive AC power. Further, the electric vehicle 300 comprises a battery pack 301 a number of other electrical components, including an electrical current transmission system, safety system, battery management system, current management system, inverter(s) and a battery busbar interconnecting the various components. Further, the electric vehicle 300 may comprise an electronic control unit (ECU) 302 in order to control the electric motor 310. The ECU 302 or components thereof can comprise or include various modules, each of which is constructed, programmed, configured, or otherwise adapted to autonomously carry out a function or set of functions.

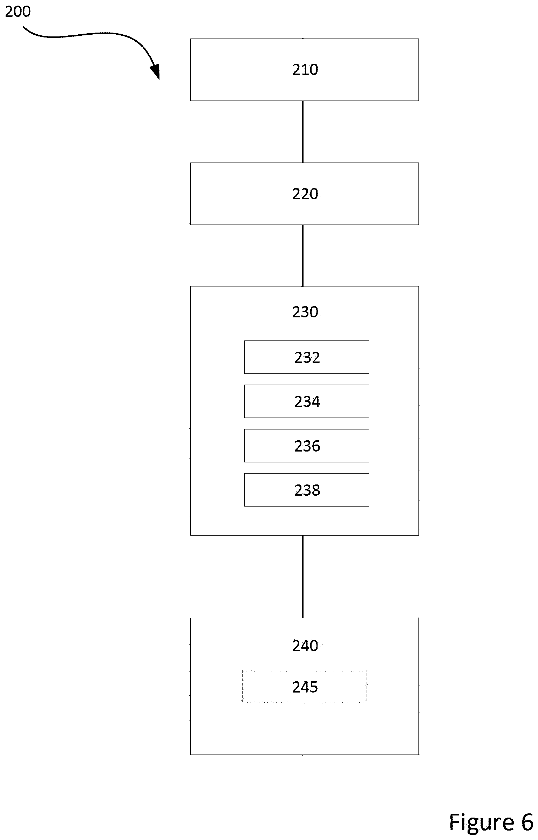

Figure 6 schematically, in the form of a flowchart illustrates a method 200 for manufacturing or assembling an electrically excited rotor comprising the steps of providing 210 an annular rotor core comprising a circumferentially distributed winding, the annular rotor core accommodating a hollow rotor shaft extending axially along a centre axis. Further, the method comprises the step of providing 220, 230 a transformer device and a rectifier board.

The rectifier board is provided by forming 232, 234 a first layer of a substrate and traces at an attachment surface of said first layer. Further, mounting 236 control and switching components to said attachment surface and attaching 238 a second layer of substrate on top of said first layer of substrate to embed said control and switching components.

Further, the method 200 comprises the step of assembling (240) said annular rotor core, transformer device and rectifier board to form an electrically excited rotor, wherein the rectifier board is electrically connected between said winding and said transformer device by a busbar arrangement.

In some aspects of the present disclosure, the second layer of substrate is molded/overmolded to said first layer of substrate. Further, in some aspects herein, at least one of the first and second layer comprises at least one thermal VIA arranged to dissipate heat away from the switching and control components.

The at least one VIA may be connected to at least one thermal plate, the at least one thermal plate being part of an outer surface of said second layer and/or an outer surface of said first layer.

Moreover, the method 200 may in the step of assembling 245 comprise the step of attaching 245 said rectifier board to a base surface of said rotor shaft, wherein an outer surface of said second layer or an outer surface of said first layer abuts said base surface.

## Claims

1. An electrically excited rotor (100) for an electric motor comprising:
- an annular rotor core (110) comprising a circumferentially distributed winding (120);
- a hollow rotor shaft (20) accommodated by said annular rotor core (110), the rotor shaft (20) extending axially along a centre axis (c1);
- a transformer device (14);
- a rectifier board (15) arranged to receive AC power from said transformer device (14) and rectify said AC power to DC power;
- a busbar arrangement (13a, 13b) electrically connecting said rectifier board (15) between said winding (120) and said transformer device (14);
wherein, the rectifier board (15) comprises a substrate structure (19), and switching and control components (16), the switching and control components (16) being embedded in said substrate structure (19) between a first and an opposing second surface (15a, 15b) of said substrate structure (19);
wherein the rectifier board (15) is secured to an interior (21) of said rotor shaft (20).

2. The electrically excited rotor (100) according to claim 1, wherein the rotor shaft (20) comprises a base surface (21a) at one end portion of said rotor shaft (20), wherein said first surface (15a) of said substrate structure (19) is attached to said base surface (21a).

3. The electrically excited rotor (100) according to claim 2, wherein the first surface (15a) abuts said base surface (21a).

4. The electrically excited rotor (100) according to any one of the claims 1-3, wherein the rectifier board (15) comprises at least one thermal vertical interconnect access, VIA (17), arranged to dissipate heat away from the switching and control components (16).

5. The electrically excited rotor (100) according to claim 4, wherein the at least one VIA (17) is in contact with a non-conductive portion of one of the switching and control components (16).

6. The electrically excited rotor (100) according to any one of the claims 4 or 5, wherein the first surface and/or the second surface (15a, 15b) comprises at least one thermal plate (18), wherein the at least one VIA (16) is thermally connected to the at least one thermal plate (18).

7. The electrically excited rotor (100) according to any one of the preceding claims,
wherein the rotor (100) comprises a cooling device (30) arranged to spray cooling medium onto said second surface (15b) of the substrate structure (19) of said rectifier device (15).

8. The electrically excited rotor (100) according to any one of the preceding claims,
wherein the substrate structure (19) comprises at least a first and a second layer of substrates (L1, L2), wherein the switching and control components (16) are on an attachment surface (16a) of said first layer, wherein said second layer covers said attachment surface (16a), thereby embedding said switching and control components (16) within the rectifier board (15).

9. The electrically excited rotor (100) according to claim 8, wherein the first and the second layers (L1, L2) are joined by a molding process.

10. The electrically excited rotor (100) according to claim 8 or 9, wherein the attachment surface (16a) comprises traces forming conductive pathways.

11. A method (200) for manufacturing an electrically excited rotor comprising the steps of:
- providing (210) an annular rotor core comprising a circumferentially distributed winding, the annular rotor core accommodating a hollow rotor shaft extending axially along a centre axis;
- providing (220) a transformer device;
- providing (230) a rectifier board, by
∘ forming (232) a first layer of a substrate;
∘ forming (234) traces at an attachment surface of said first layer;
∘ mounting (236) control and switching components to said attachment surface;
∘ attaching (238) a second layer of substrate on top of said first layer of substrate to embed said control and switching components;
- assembling (240) said annular rotor core, transformer device and rectifier board to form an electrically excited rotor, wherein the rectifier board is electrically connected between said winding and said transformer device by a busbar arrangement.

12. The method (200) according to claim 11, wherein the second layer of substrate is molded to said first layer of substrate.

13. The method (200) according to claim 11 or 12, wherein at least one of the first and second layer comprises at least one thermal VIA arranged to dissipate heat away from the switching and control components.

14. The method (200) according to claim 13, wherein the at least one VIA is connected to at least one thermal plate, the at least one thermal plate being part of an outer surface of said second layer and/or an outer surface of said first layer.

15. The method (200) according to any one of the claims 11-14, wherein the step of assembling (240) comprises:
- attaching (245) said rectifier board to a base surface of said rotor shaft, wherein an outer surface of said second layer or an outer surface of said first layer abuts said base surface.
